# EUROPÄISCHE PATENTSCHRIFT

(11) **EP 0 580 888 B1**
(45) Veröffentlichungstag und Bekanntmachung des Hinweises auf die Patenterteilung: **02.12.1998**
(21) Anmeldenummer: 92113023.3
(22) Anmeldetag: 30.07.1992
(51) Int. Cl.: H04Q 11/04, H04M 3/30

(54) **Steuerverfahren für ein Prüfsystem**
Control method for a test system
Méthode de commande pour un système de test

(43) Veröffentlichungstag der Anmeldung: 02.02.1994
(73) Patentinhaber: SIEMENS AKTIENGESELLSCHAFT, 80333 München (DE)
(72) Erfinder: Renger, Wolfgang, Dipl.-Ing. (FH), W-8000 München 21 (DE); Waldhauser, Richard, Dipl. Ing. (TU), W-8000 München 60 (DE)

(56) Entgegenhaltungen:
- TELCOM REPORT Bd. 8, Nr. 6, November 1985, MUNCHEN DE Seiten 367 - 371 RICHARD SCHLAG ET AL 'AUTOMATISCHE MESSUNG DER BETRIEBSGUTE IM DIGITALVERMITTLUNGSSYSTEM EWSD'
- TELCOM REPORT Bd. 8, Nr. 1, Januar 1985, MUNCHEN DE Seiten 25 - 31 BERT EISL ET AL 'STEUERUNGSKONZEPT DER INTEGRIERTEN PRUFTECHNIK FUR DIE EWSD-PERIPHERIE'
- IEEE INTERNATIONAL CONFERENCE ON COMMUNICATIONS Bd. 1/3, 23. Juni 1985, CHICAGO(US) Seiten 132 - 136 M.DINARO ET AL 'AN AUTOMATIC SUBSCRIBER TESTING
- SYSTEM SESSION 6.2'

## Beschreibung

Die Erfindung betrifft eine Einrichtung gemäß Oberbegriff des Patentanspruchs 1.

Ein funktionssicherer Telekommunikationsanschluß ist eine wichtige Voraussetzung dafür, daß ein Telekommunikationsteilnehmer die Dienste und Dienstmerkmale eines Telekommunikationsnetzes bzw. Telekommunikationssystems zuverlässig nützen kann. Die für eine Prüfung eines Telekommunikationsanschlusses nötigen Hart- und Softwarekomponenten sind in einem elektronischen Wählsystem integriert. Im einzelnen können mit den systemintegrierten elektronischen Hard- und Softwarekomponenten prozessorgesteuert Prüfungen wie z. B. eine Fehlererkennung, Fehlerdiagnose oder Fehlerlokalisierung in einer Teilnehmerschaltung/Teilnehmersatzbaugruppe, einem Teilnehmerendgerät oder einer Teilnehmerleitung durchgeführt werden. Darüberhinaus ermöglicht das Telekommunikationssystem ein automatisches Prüfen eines Telekommunikationsanschlusses, das z. B. über einen Teilnehmeranschluß selbst eingeleitet werden kann. Die oben angeführten systemintegrierten Prüfungen werden zentral durch einen Prozessor gesteuert, der auf einer Anschlußgruppe, die zwischen einem Koppelnetz und einer Teilnehmerleitungseinheit eines Telekommunikationssystems angeordnet ist. Dabei werden eine Vielzahl unterschiedlicher Prozeduren, durch Anreize angestoßen wie beispielsweise:
- Aufnahme von Kommandos von einem Koordinationsprozessor,
- Senden von Meldungen an einen Koordinationsprozessor,
- Prüfzugriff auf einen Prüfling (z.B. Teilnehmeranschluß) schalten,
- Prüfeinrichtung belegen und
- Prüfung durchführen.

Die Anreize können im wesentlichen in drei Anreiztypen untergliedert werden: Commands/Messages, Peripheral Events und Internal Events. Anreizerkennungsprozeduren sowie durch Anreize angestoßene Prozeduren werden vom Betriebssystem eines Prozessors gesteuert. Durch zentrale Steuerprogrammodule werden jeweils Prüfprozeduren bei einer Teilnehmersatzprüfung, einer manuellen Teilnehmerleitungsprüfung oder einer automatischen Prüfung durchgeführt. Diese zentralen Steuerprogrammodule sind im Gruppenprozessor einer Anschlußgruppe implementiert. Die Steuerprogrammodule arbeiten nach dem Prinzip einer Zustands/Anreiz-Maschine, d. h., daß durch die in Programmodulen vermerkten und durch Anreize angestoßenen Unterprogrammroutinen abhängig vom jeweiligen Programmzustand, unterschiedliche Aufgaben durchgeführt werden. Zu einer komplexen Arbeitsweise des Steuerprogrammoduls kommt, bedingt durch eine Mehrfachbelegung eines Eingangs durch Prüfbaugruppen einer Prüfeinheit, ein zusätzlicher komplexer Anreizverarbeitungssowie Verwaltungsaufwand hinzu. Bei einem Prüfauftrag, angestoßen durch einen Koordinationsprozessor, wird dem zentralen Steuerprogrammodul der Eingang der zu prüfenden Teilnehmereinheit an der Teilnehmerleitungseinheit mitgeteilt. In diesem Zustand ist nicht die Vermittlungstechnik für den Eingang der Teilnehmerleitungseinheit zuständig, sondern die Prüftechnik, wobei ein in einer Gerätespei-chertabelle vermerkter vermittlungstechnischer Programmodultyp durch einen Prüfprogrammodultyp ersetzt wird. Eine eindeutige Prüfbaugruppenzuordnung aufgrund der Mehrfachbelegung eines Eingangs durch diese erfordert einen hohen, komplexen Verwaltungs- sowie Steuerungsaufwand. Des weiteren bedarf es komplexer Programmodulstrukturen, um eine Prüfprozedur z.B. eine Teilnehmeranschlußprüfung vom Teilnehmeranschluß aus einzuleiten sowie bei einer Anreizverarbeitung systemintegrierte Prüfprozeduren durchzuführen.

Der Erfindung liegt die Aufgabe zugrunde, eine Steuerung eines Prüfsystems anzugeben, das eine Reduzierung des komplexen Verwaltungs- und Steuerungsaufwandes gestattet.

Die Aufgabe wird erfindungsgemäß durch die im Kennzeichen des Patentanspruchs 1 genannten Merkmale gelöst.
Die Erfindung bringt durch ein Prüfprozeduren ausführendes Prüfbaugruppensteuerungs-Programmodul den Vorteil mit, daß alle von den Prüfbaugruppen gesendeten oder ausgehenden Anreize empfängt, auswertet oder über eine interne Schnittstelle zum zentralen Steuermodul weiterleitet, wobei die einzelnen Schritte zum Belegen und Auslösen der zur Prüfung nötigen Hardware sowie Software abgearbeitet und kontrolliert wird. Das Prüfbaugruppensteuerungs-Programmodul verarbeitet dabei Anreize aus der Peripherie (z. B. Prüfbaugruppen) von der zentralen Steuerung (interne Anreize) und in speziellen Situationen vom Betriebssystem selbst. Ein zeitintensives Auswerten oder eine Herkunftsbestimmung der Anreize entfällt. Die Anbindung des Prüfbaugruppensteuerungs-Programmoduls an das zentrale Steuermodul führt zu einer wesentlichen Entlastung bei der dynamischen Beanspruchung des Betriebssystems. Aus der Sicht der zentralen Steuerung kann das Prüfeinheitensteuerungs-Programmodul als eine funktionelle Einheit betrachtet und mit wenigen "hochprioren" Anweisungen angestoßen werden. Eine wesentliche Vereinfachung bei der Bearbeitung von Anreizen ist auch, daß das Prüfbaugruppensteuerungs-Programmodul auf Operationstabellen des Betriebssystems zugreifen kann, was den Vorteil mit sich bringt, daß zeitintensive Initialisierungsmaßnahmen unter Zuhilfenahme von Unterprogrammroutinen entfallen. Darüberhinaus können in das Prüfeinheitensteuerungs-Programmodul schnell neue Prüfprozeduren für zu prüfende interne oder externe angeordnete Baugruppeneinheiten integriert werden.

Eine weitere Ausgestaltung der Erfindung ist, daß das Prüfbaugruppensteuerungs-Programmodul durch eine Prüfeinheit zeitüberwacht ist. Dies bringt den Vorteil mit sich, daß bei Fehlern innerhalb eines Prüfzyklus diese sofort von der zentralen Steuerung eines Prüfmoduls erkannt wird und der Prüfvorgang mit einem definierten Endzustand und entsprechenden Meldungen an einem Teilnehmeranschluß-Prüfplatz beendet wird.
Eine weitere vorteilhafte Ausgestaltung der Erfindung besteht darin, daß nach Abschluß einer Prüfroutine der jeweilige Programmzustand in den Gerätespeichertabellen der passiven Prüfeinheitenbaugruppen aktualisiert wird. Dies bringt den Vorteil mit sich, daß eine dynamische Last des Betriebssystems wesentlich reduziert wird.

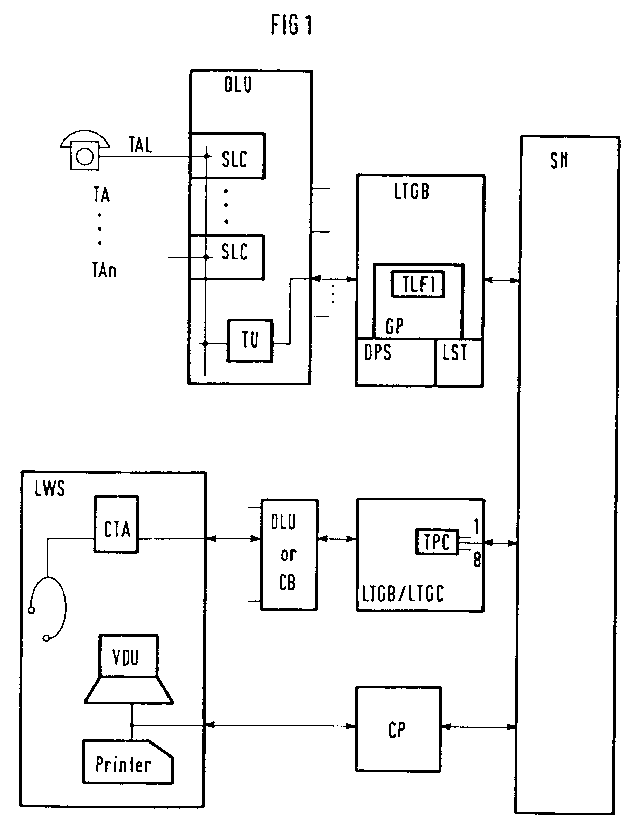

Anhand der Zeichnungen soll im folgenden ein Ausführungsbeispiel der Erfindung erläutert werden. Es zeigen
- FIG 1: eine schematische Darstellung des Prüfsystems,
- FIG 2: eine schematische Blockdarstellung zur Verarbeitung von Anreizen,
- FIG 3: eine schematische Darstellung von einer Belegung von Gerätespeichertabellen und
- FIG 4a/b: ein Ablaufdiagramm zur Veranschaulichung einiger wesentlicher programmtechnischer Schritte während einer Prüfroutine.

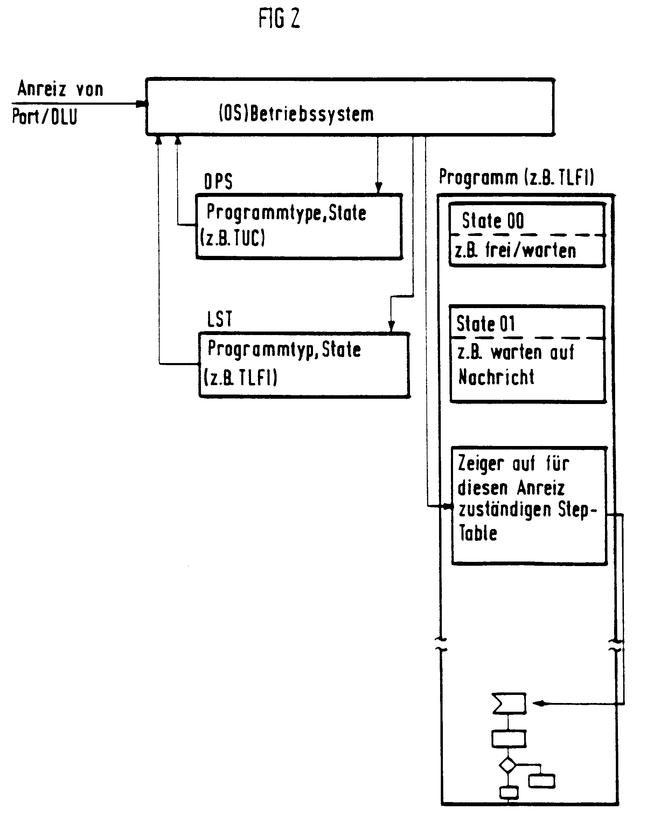

FIG zeigt eine schematische Darstellung eines in einem Telekommunikationssystem integrierten Prüfsystems. Die Prüfung eines Teilnehmeranschlusses TA kann dabei entweder von einem Teilnehmeranschluß-Prüfplatz LWS oder vom Teilnehmeranschluß TA über einen sogenannten Ringback service RBS angestoßen werden. Der Ringback service RBS dient einem Wartungstechniker als automatischer Prüfplatzpartner zum Prüfen von Teilnehmerleitungen TAL und Teilnehmeranschlüssen TAn. Bei einem Ringback service RBS wird die Teilnehmereinrichtung TA durch eine Prüfeinheit TU in der Teilnehmerleitungseinheit DLU belegt (siehe auch FIG 2 sowie dazugehörige Beschreibung). Wird eine Teilnehmeranschlußschaltung/Teilnehmersatzbaugruppe, ein Teilnehmerendgerät oder eine Teilnehmerleitung vom Teilnehmeranschluß-Prüfplatz LWS geprüft, wird durch Eingabe eines Prüfbefehls z.B. START LTEST am Terminal VDU über einen Koordinationsprozessor CP der Verbindungsaufbau zwischen dem Prüfplatz LWS und dem Prüfling hergestellt. Der Koordinationsprozessor CP übergibt den Prüfauftrag an den jeweiligen Gruppenprozessor GP, der auf einer Anschlußbaugruppe LTGB angeordnet ist. Den Verbindungsaufbau zur Prüfeinheit TU steuert ein Gruppenprozessor GP, zu dessen Bereich der zu prüfende Teilnehmeranschluß TA oder Teilnehmerschaltung gehört. Im Gruppenprozessor GP ist dazu ein zentrales Steuerprogrammodul TLFI implementiert. Dieses zentrale Steuerprogrammodul ist anschlußgruppenleitungsorientiert und führt spezielle Umsetzfunktionen für integrierte Teilnehmerleitungsprüfungen durch. Nach einem Verbindungsaufbau zwischen einem zu prüfenden Teilnehmeranschluß oder einer Teilnehmerschaltung und dem Teilnehmeranschluß-Prüfplatz LWS veranlaßt das zentrale Steuerprogrammodul TFLI eine Anbindung des Prüflings über einen Prüfbus an einen Prüfkoppler. Die Prüfeinheit TU hat über den Prüfkoppler Zugriff auf alle Teilnehmeranschlüsse TA an einer Teilnehmerleitungseinheit DLU. Die Steuerung der Prüfeinheit TU wird von einem leitungsorientierten Prüfbaugruppensteuerungs-Programmodul TUC übernommen. Durch das Prüfbaugruppensteuerungs-Programmodul TUC werden die von der Prüfeinheit TU kommenden Meldungen - gegebenenfalls nach einer Vorverarbeitung - mittels Anreizen an die jeweiligen zentralen Steuerprogrammodule, z.B. TLFI oder RBS, weitergereicht. Mit dem Prüfsystem können beispielsweise eine Teilnehmerschaltung/Teilnehmersatz, Teilnehmerleitung TAL sowie ein Teilnehmeranschluß TA geprüft werden. Bei einem Teilnehmersatz, der nachfolgend aufgeführte Funktionen ausführt:
- Versorgung eines Teilnehmeranschlusses mit Betriebsspannung,
- Schutz der Vermittlungseinrichtung vor Überspannung,
- 2/4 und 4/2-Drahtwandlung,
- Digital/Analog- und Analog/Digital-Wandlung,
- Signalisierung zum und vom Telekommunikationsteilnehmer,
- Kodierung,
- Testbusanschaltung
werden durch Prüfroutinen folgende Prüfungen durchgeführt: Prüfen der Speisespannung, Dämpfung, Gabelsperrdämpfung, die Symmetrie sowie die Prüfung der D/A-A/D Wandlung.

FIG 2 zeigt eine vereinfachte Blockdarstellung zur Verarbeitung von Anreizen. Die Anreize werden dabei durch ein Hardware- oder Softwareereignis gebildet, z. B. Anstoß einer Prüfroutine vom Koordinationsprozessor CP. Das Betriebssystem OS liest zur Verarbeitung der aufgenommenen Anreize aus Gerätespeichertabellen DPS die zuständigen Programmtypen sowie deren Zustände z.B. Warten auf Ergebnis, Prüfeinheit TU, Belegen oder Zeitschlitzzuweisung.
Die Gerätespeichertabellen DPS enthalten jeweils Daten wie z. B. Programmtyp und Programmzustand des für die mit den Gerätespeichertabellen DPS verknüpften Programms wie, z. B. das Prüfbaugruppensteuerungs-Programmodul TUC. In einem ersten anreizverarbeitenden Schritt werden durch das Betriebssystem programmtechnische Schritte veranlaßt, die die Anreize von den Prüfbaugruppen FTEM, LMEM, LVMM liest.
In einer nachfolgenden Programmprozedur werden vom Betriebssystem jeweils aus den Gerätespeichertabellen DPS der Teilnehmerleitungseinheit DLU der Programmtyp und dessen Zustand herausgelesen. Nach Ansteuerung eines Programmoduls, beispielsweise des Prüfbaugruppensteuerungs-Programmoduls TUC, wird aufgrund der in Operationsfeldern vermerkten Daten, auf die das Betriebssystem OS Zugriff hat, über Umwertetabellen auf eine Adresse einer auszuführenden Unterprogrammroutine zugegriffen.

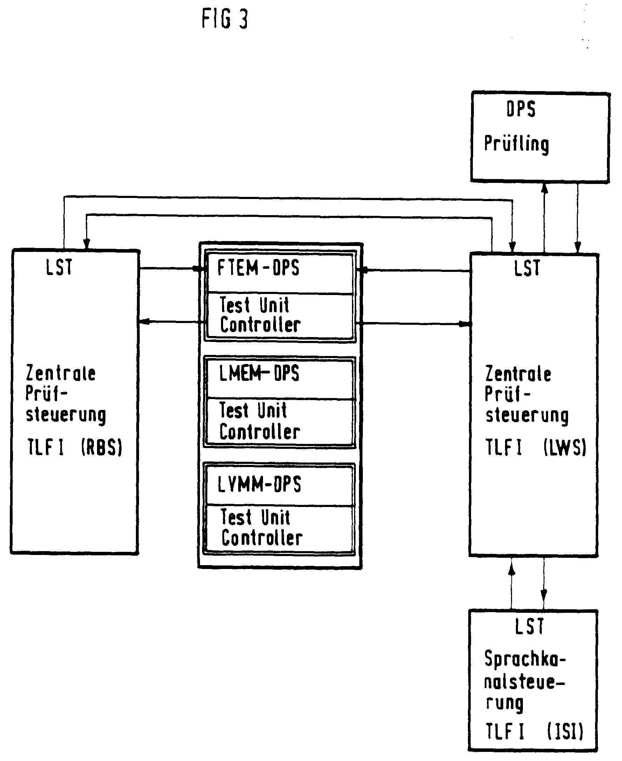

FIG 3 zeigt eine schematische Darstellung einer Belegung von Gerätespeichertabellen DPS,LST. Die eigentliche Abarbeitung der Verarbeitung der vermittlungstechnischen sowie prüftechnischen Aufgaben oder Prozeduren übernehmen jeweils die darin vermerkten Programmodule. Um diese gezielt ansprechen zu können, sind im Betriebssystem eine Reihe von Algorithmen zu durchlaufen. Die Schnittstelle zwischen dem Programmodul und dem Gruppenprozessor-Betriebssystem bilden im wesentlichen die Gerätespeichertabellen, z.B. LST, DPS sowie dessen Unterteilungen. So z.B. enthält die Gerätespeichertabelle - DLU-Port-Status-Table - DPS variable Daten, auf die sowohl vom Prüfbaugruppensteuerungs-Programmodul TUC als auch vom Betriebssystem OS zugegriffen werden kann, z. B. wird hier ein aktueller Zustand (Zustands-Adresse) vom Prüfbaugruppensteuerungs-Programmodul TUC in Abhängigkeit von den zu erwartenden Ereignissen z.B. Antwort von einer Prüfbaugruppe FTEM oder Antwort auf eine Zeitschlitzzuweisung vermerkt. Die Gerätespeichertabelle DPS für die Teilnehmerleitungseinheit DLU wird als DLU-Port-Status-Table bezeichnet.

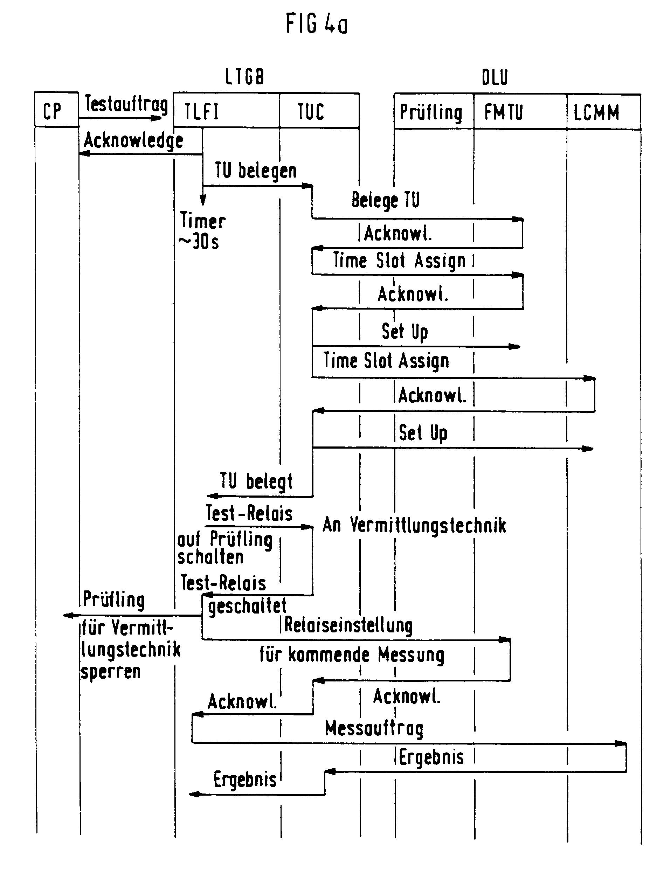

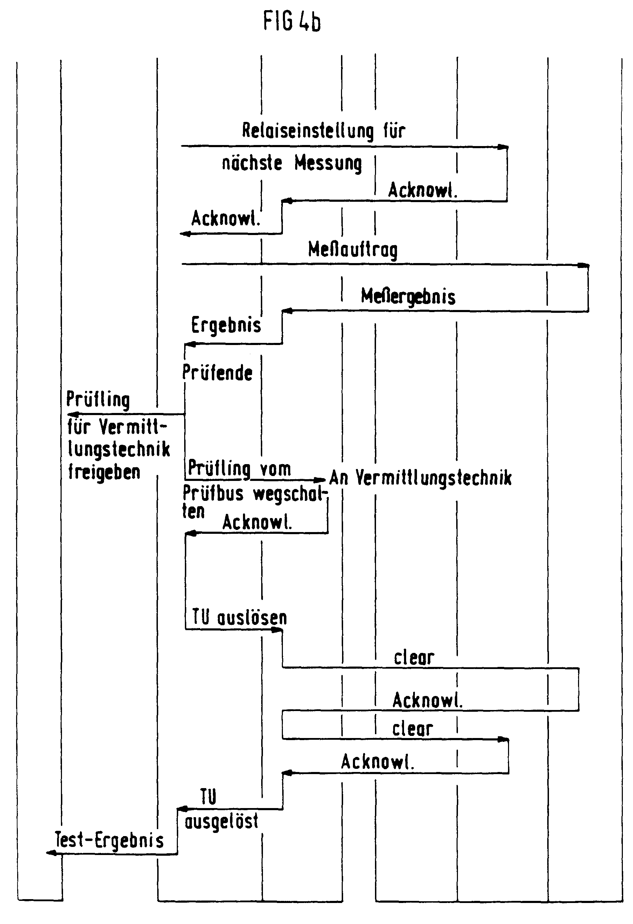

FIG 4a/b zeigt ein Ablaufdiagramm zur Veranschaulichung einiger wesentlicher programmtechnischer Schritte während einer Prüfroutine. Alle wesentlichen den Prüfvorgang einleitenden und durchführenden Schritte werden dabei von dem Prüfbaugruppensteuerungs-Programmodul TUC ausgeführt. Mit dem Prüfbaugruppensteuerungs-Programmodul TUC werden alle von den in der Prüfeinheit TU zusammengefaßten Prüfbaugruppen, z.B. eine Prüfbaugruppe FTEM, eine Leitungsmeßbaugruppe für Teilnehmeranschlußbaugruppen DLU für eine digitale Teilnehmerleitungseinheit FTEM,LMEM sowie eine Pegelmeßbaugruppe für eine Teilnehmeranschlußbaugruppe für eine digitale Teilnehmerleitungseinheit LVMM bzw. einer Funktionsprüfbaugruppe der Prüfeinheit TU gesendeten Anreize verarbeitet. Die in FIG 4a/b aufgeführten Baugruppenmodule FMTU und LCMM entsprechen einer zweiten Generation von Prüfbaugruppen und ersetzen die in einer ersten Generation verwendeten Prüfbaugruppen FMEM (FMTU), LMEM(LCMM) und LVMM (LCMM). Die Abläufe für Belegen und Auslösen der Prüfeinheit TU laufen nach Empfang des jeweiligen Anreizes vom zentralen Steuerprogrammodul TLFI unter TUC-Kontrolle ab. Die Abläufe für Belegen und Auslösen werden nicht mehr vom zentralen Steuerprogrammodul TLFI überwacht. Das zentrale Steuerprogrammodul TLFI überwacht nur noch, ob das Prüfbaugruppensteuerungs-Programmodul TUC die ihm gestellten Aufgaben mit der Gesamtheit der dazu notwendigen Einzelschritte in einer vorgeschriebenen Zeit erfüllt. Während des Betriebes (die Zeit zwischen erfolgter Belegung der Prüfeinheit TU und Beginn des Auslösevorganges) werden die von der Prüfeinheit TU kommenden Meldungen gegebenenfalls nach einer Vorverarbeitung durch das TUC durch entsprechende Anreize an die jeweiligen Unterprogrammodule weitergereicht. Programmtechnisch stellt das Betriebssystem OS den aufgerufenen Programmen bestimmte Daten aus den Operationstabellen OT-Feldern zur Verfügung, welche das TUC von Beginn an in den ausführenden Unterprogrammmodulen verwendet.

## Patentansprüche

1. Steuerverfahren für ein Prüfsystem in einer prozessorgesteuerten Telekommunikationsanlage, wobei auf einer Anschlußgruppe (LTGB) zentrale Steuerprogrammodule (TLFI, RBS) angeordnet sind, und diese über eine in Prüfbaugruppen (FTEM,LMEM,LVMM) unterteilte Prüfeinheit (TU) mit einem Prüfling (TA,...) verbunden ist und Prüfprozeduren ausführt,
**dadurch gekennzeichnet**,
daß ein leitungsorientiertes Prüfbaugruppensteuerungs-Programmodul (TUC) durch das zentrale Steuerprogrammodul (TFLI,RBS) angestoßen wird,
daß das Prüfbaugruppensteuerungs-Programmodul (TUC) in jeder der zu den Prüfbaugruppen (FTEM,LMEM,LVMM) gehörenden Gerätespeichertabellen (DPS) eingetragen ist und bei Abruf eines eine bestimmte Prüfprozedur ausführenden Programmoduls Daten einer Prüfprozedur bereitgestellt werden und
daß das in der Ausführungsphase befindliche Prüfbaugruppensteuerungs-Programmodul (TUC) nach Abschluß der Prüfroutine den jeweils aktuellen Programmzustand in den Gerätespeichertabellen (DPS) der passiven Prüfbaugruppen aktualisiert.

2. Steuerverfahren nach Anspruch 1,
**dadurch gekennzeichnet**,
daß das Prüfbaugruppensteuerungs-Programmodul (TUC) mit den auf der Anschlußbaugruppe (LTG) angeordneten Prüfbaugruppen (FTEM,LMEM,LVMM) kommuniziert und entsprechende Prüfprozeduren einleitet sowie durchführt.

3. Steuerverfahren nach Anspruch 1,
**dadurch gekennzeichnet,**
daß das Prüfbaugruppensteuerungsprogrammodul (TUC) durch das zentrale Steuerprogrammodul (TLFI) zeitüberwacht ist.

4. Steuerverfahren nach Anspruch 1,
**dadurch gekennzeichnet,**
daß die einzelnen Prüfaufgaben State-Event gesteuert durchgeführt werden.

5. Steuerverfahren nach Anspruch 1,
**dadurch gekennzeichnet,**
daß die zur Prüfeinheit (TU) gehörenden Gerätespeichertabellen (DPS) transitive Speicher sind.

## Claims

1. Control method for a test system in a processor-controlled telecommunications system, central control program modules (TLFI, RBS) being arranged on a line trunk group (LTGB), and said line trunk group being connected to a test object (TA,...) via a testing unit (TU) subdivided into test modules (FTEM, LMEM, LVMM), and carrying out test procedures, characterized in that a line-oriented test module control program module (TUC) is initiated by the central control program module (TFLI, RBS), in that the test module control program module (TUC) is entered into each of the device memory tables (DPS) belonging to the test modules (FTEM, LMEM, LVMM), and data of a test procedure are provided when a program module which carries out a specific test procedure is called, and in that after termination of the test routine the test module control program module (TUC), which is in the execution phase, updates the respective current program state in the device memory tables (DPS) of the passive test modules.

2. Control method according to Claim 1, characterized in that the test module control program module (TUC) communicates with the test modules (FTEM, LMEM, LVMM) arranged on the line trunk group (LTG), and initiates and carries out corresponding test procedures.

3. Control method according to Claim 1, characterized in that the test module control program module (TUC) is time-monitored by the central control program module (TLFI).

4. Control method according to Claim 1, characterized in that the individual test tasks are carried out under state-event control.

5. Control method according to Claim 1, characterized in that the device memory tables (DPS) belonging to the testing unit (TU) are updatable memories.

## Revendications

1. Procédé de commande pour un système de test dans une installation de télécommunication commandée par processeur, des modules de programme de commande centraux (TLFI, RBS) étant disposés sur un groupe de raccordement (LTGB) et celui-ci étant relié par l'intermédiaire d'une unité de test (TU) divisée en modules de test (FTEM, LMEM, LVMM) à un élément à tester (TA, ...) et exécutant des procédures de test,
caractérisé par le fait que
l'on déclenche un module de programme de commande de modules de test (TUC) affecté aux lignes au moyen du module de programme de commande central (TFLI, RBS),
l'on enregistre le module de programme de commande de modules de test (TUC) dans chacun des tableaux de mémoire d'appareil (DPS) appartenant aux modules de test (FTEM, LMEM, LVMM) et, lors de l'appel d'un module de programme exécutant une certaine procédure de test, on fournit des données à une procédure de test, et que
après la fin de la routine de test, le module de programme de commande de modules de test (TUC) se trouvant en phase d'exécution actualise l'état de programme respectivement courant dans les tableaux de mémoire d'appareil (DPS) des modules de test passifs.

2. Procédé de commande selon la revendication 1,
caractérisé par le fait que
le module de programme de commande de modules de test (TUC) communique avec les modules de test (FTEM, LMEM, LVMM) agencés sur le module de raccordement (LTG) et déclenche et exécute des procédures de test correspondantes.

3. Procédé de commande selon la revendication 1,
caractérisé par le fait que
le module de programme de commande de modules de test (TUC) est soumis à un contrôle de temps par le module de programme de commande central (TLFI).

4. Procédé de commande selon la revendication 1,
caractérisé par le fait que
les différentes tâches de test sont exécutées selon une commande appelée State/Event.

5. Procédé de commande selon la revendication 1,
caractérisé par le fait que
les tableaux de mémoire d'appareil (DPS) appartenant à l'unité de test (TU) sont des mémoires transitives.
